# EUROPEAN PATENT APPLICATION

(11) **EP 4 687 079 A1**
(43) Date of publication of application: **04.02.2026**
(21) Application number: 24192105.5
(22) Date of filing: 31.07.2024
(51) Int. Cl.: G06N 5/02, G06N 5/045

(54) **SYSTEM AND METHOD FOR PROVIDING SEMANTIC EXPLANATIONS FOR PREDICTIONS MADE BY ARTIFICIAL INTELLIGENCE MODEL**

(71) Applicant: Siemens Aktiengesellschaft, 80333 München (DE)
(72) Inventor: BANERJEE, Amar, 412207 Pune, Maharastra (IN); SABOO, Shantanu, 461331 Harda, MP (IN)
(74) Representative: HKW Intellectual Property PartG mbB

(57) **Abstract**

Disclosed is a method (100, 600) for providing semantic explanations (614) for predictions made by an artificial intelligence (AI) model (610). The method executes code (608) to create/train an AI model using a solution description that maps problem domain knowledge graph (602) attributes to solution domain knowledge graph (604) features. The method receives a prediction output, traces it through the solution domain knowledge graph (604) to identify contributing inputs and intermediate representations, generates a feature mapping matrix, and identifies relevant entities and relationships from the problem domain knowledge graph. The method outputs an explanation (614) comprising at least one of: identified contributing input features and weights, traced path through hidden layers, and relevant problem domain entities and relationships. This approach provides context-rich, domain-specific explanations that enhance understanding of predictions of the AI model.

## Description

The present invention relates to the field of artificial intelligence and machine learning. More specifically, the invention pertains to methods and systems for providing semantic explanations for predictions made by AI models, particularly in complex domains such as manufacturing processes.

Artificial intelligence (AI) and machine learning (ML) models have become increasingly prevalent in various industries, including manufacturing. AI-based solutions use complex and non-intuitive data to build learning models for various domains such as plant processes and machine behaviour, aimed at providing predictive analytics. These models are customized to serve specific problem domains and their solution approaches vary based on the domain. For example, a classification model for plant operations will differ in design and architecture from another domain such as healthcare.

The decisions made in designing the AI model, such as the number of hidden layers and neurons, are dependent on the nature of the problem domain and the relationship between the domain concepts and data. These models are capable of processing vast amounts of data to make predictions and recommendations that can optimize processes, improve efficiency, and reduce costs. However, the complexity of these models often makes it difficult for human operators and domain experts to understand the reasoning behind the predictions and recommendations.

For instance, in critical systems such as power plants and factories, AI-based solutions support operations by identifying and predicting certain aspects of the system. The accuracy of these predictions is dependent on the training data, and end users, such as plant operators, may not have visibility into the rationales behind the predictions. This lack of transparency can lead to a lack of confidence in accepting and acting upon the AI-generated insights. In addition to end users, AI engineers are also stakeholders that rely on the explanations of AI models. As the designers of the AI solution, they are responsible for the design choices such as the number of hidden layers, activation functions, and links between input and hidden layers, which greatly influence the predictions.

The data produced during the operations of a plant becomes the basis to extract features and train AI models. The produced data is the effect of the domain structure (connections between the various components in the plants), the theoretical domain (power manufacturing etc.) and the processes in the plant (boiler process, coal segmentation process etc.). Hence the AI model trained on this data, also gets affected with the problem domain. Hence certain predictions are based on the domain and hence need to be included during explanations to allow the end user to understand the explanations in the vocabulary and semantics that is familiar to the end user.

Further, to ensure that the AI model is correctly built, currently the AI engineer depends on model testing which happens post the model training. This can be an iterative process requiring multiple rounds of model reconfiguration and retraining. Hence consuming additional resources. To validate the AI model being correctly built is a task that is learned over experience by domain experts. In this one of the major model design decisions is to choose the correct model for the specific problem type e.g. if it is a predictions problem, a regression model may be used, and if it a forecasting problem, LSTMs/GRUs or the like may be better option. Hence, it is important to capture the dependency of the problem type to the solution types.

Furthermore, the behaviour of the AI model also depends on the chosen features and hence feature selection is an important part of the modelling process. The predicted values from the AI model are affected due to the number and type of features passed to the AI model. Another major solution design decision is to choose the correct input and output features for the AI model. Typically, this task is done by considering the problem domain and the variables/attributes. In the problem domain, the variables/attributes are connected to other variables/attributes directly or indirectly. For example, in a turbine, the RPM depends upon the steam pressure in the turbine and the diameter of the turbine itself. However, while choosing input features for the AI model, these connections are neglected.

Moreover, hyperparameters for the AI model are dependent on various factors like the amount of training data, quality of data etc. The AI model behaviour depends on how these hyperparameters are tuned and hence it is important to know the amount and the quality of data upfront before designing the AI model. For example, if the data quality is large, the epochs and batch size should be relatively high. Also, if the data is homogeneous, meaning the data points have a relatively simple relationship, the epochs can be reduced. Hence, the solution model should also describe the type of data.

This highlights the need for semantic explainability to provide a basis for end users to assess the validity of predictions and increase confidence in their use. By explaining the predictions during operations, AI engineers can assess the impact of their design choices on the solution objectives. This enables them to explain the solution from a solution domain perspective, reducing the effort and cost involved in updating the design choices and fixing any issues with the AI model.

Current approaches to explaining AI predictions include SHAP (SHapley Additive exPlanations), which is a game theoretic approach to explain the output of any machine learning model. This approach connects optimal credit allocation with local explanations using the classic Shapley value. This creates a detailed statistical explanations that are difficult to comprehend and act upon by the domain experts. SHAP explainer is pure based on statistical explanations that show the relative contribution of the input features in the overall output. Such explanations do not allow a domain expert to understand the behaviour of the AI model, primarily due to the statistical nature of explanations, limiting their usefulness in practical applications.

Therefore, there is a need for a more comprehensive approach to explaining AI predictions that incorporates both problem domain knowledge and solution domain knowledge. Such an approach would provide a complete explanation of predictions by combining both problem and solution domain explanations, increasing end user confidence in predictions, reducing the effort and cost to validate predictions, improving response time to predictions, and lowering the effort and cost to build AI solutions.

The present invention seeks to address these issues by generating semantic explanations for predictions made by an artificial intelligence (AI) model. The present invention leverages knowledge graphs representing both the problem domain and the solution domain to provide comprehensive and context-aware explanations. In particular, the proposed approach relies on the nature of the solution domain knowledge (DL) ontologies to explain the trace of the feature right from the domain model and then within the model architecture. The proposed approach considers the architectural trace from the input layer, to the output layer via all hidden layers. Such explainability enables a domain expert (AI Engineer) to reason the output based on the solution model. Statistical explanations combined with solution domain explanations provide a wider and a more detailed explanation of the AI model as compared individually. This framework aims to increase end user confidence in predictions; reduce the effort and cost to validate predictions; faster implementation of output predictions of AI model; optimize resource utilization; lower the effort and cost to build AI solutions; and provide a complete explanation of predictions by combining both problem and solution domain explanations.

The object of the present invention is achieved by a computer-implemented method for providing semantic explanations for predictions made by an artificial intelligence (AI) model. The method comprises executing code to create and/or train an AI model based on a solution description mapping attributes from a problem domain knowledge graph to features in a solution domain knowledge graph. The method further comprises receiving a prediction output by the AI model. The method further comprises tracing the prediction output through the solution domain knowledge graph to identify contributing input features and intermediate representations. The method further comprises generating a feature mapping matrix indicating relationships between input features, hidden layer representations, and the prediction output. The method further comprises identifying relevant entities and relationships from the problem domain knowledge graph connected to the contributing input features. The method further comprises outputting an explanation for the prediction output comprising at least one of the identified contributing input features and their weights, the traced path through hidden layers of the AI model, and relevant problem domain entities and relationships.

In one or more embodiments, the executable code for the AI model is generated by capturing problem domain knowledge in a problem domain knowledge graph representing the attributes including entities and relationships in a specific problem domain; capturing solution domain knowledge in a solution domain knowledge graph representing the features including components and relationships in the AI model; instantiating a solution description by mapping the attributes from the problem domain knowledge graph to the features in the solution domain knowledge graph; and generating the executable code for the AI model based on the solution description.

In one or more embodiments, capturing the problem domain knowledge comprises representing a domain including asset structure and process structure; system properties including measurement units and current values; causal and correlational relationships between the system properties; and cross-hierarchical connections.

In one or more embodiments, capturing the solution domain knowledge comprises representing components of the AI model including at least one of: the input features, output features, model architectures, model hyperparameters, loss functions, optimization algorithms, and performance metrics.

In one or more embodiments, instantiating the solution description comprises describing connections between the problem domain knowledge graph and the solution domain knowledge graph using a controlled natural language interface.

In one or more embodiments, generating the executable code comprises translating the solution description into the executable code for creating and/or training the AI model using a code generation algorithm.

In one or more embodiments, tracing the prediction comprises traversing the solution domain knowledge graph from the prediction output back to the input features through the hidden layer representations.

In one or more embodiments, generating the feature mapping matrix comprises, for each hidden layer of the AI model, recording one or more of contributing input features, number of neurons, activation functions, and weights.

In one or more embodiments, identifying the relevant entities and relationships comprises traversing the problem domain knowledge graph starting from entities corresponding to the contributing input features.

In one or more embodiments, the method further comprises receiving a description of an intent associated with the prediction; identifying a problem type based on the intent; and including the problem type in the explanation.

In one or more embodiments, the AI model is a machine learning model for predicting parameters of a manufacturing process, and wherein the problem domain knowledge graph represents components and processes of a manufacturing plant.

In one or more embodiments, the prediction output comprises at least one of temperatures in reaction zones, gas composition at a process exit point, or material bed height.

In one or more embodiments, the contributing input features comprise at least one of material quantities, equipment speeds, rotation speeds, feed rates, or conveyor speeds.

The object of the present invention is also achieved by a system comprising one or more processing units and a memory unit communicatively coupled to the one or more processing units. Herein, the memory unit comprises an artificial intelligence (AI) model explainer module stored in the form of machine-readable instructions executable by the one or more processing units, wherein the AI model explainer module is configured to perform aforementioned method steps for providing semantic explanations for predictions made by an AI model.

The object of the present invention is further achieved by a computer program product, having machine-readable instructions stored therein, that when executed by the one or more processing units, cause the one or more processing units to perform aforementioned method steps.

Still, other aspects, features, and advantages of the invention are readily apparent from the following detailed description, simply by illustrating a number of particular embodiments and implementations, including the best mode contemplated for carrying out the invention. The invention is also capable of other and different embodiments, and its several details may be modified in various obvious respects, all without departing from the scope of the invention. Accordingly, the drawings and description are to be regarded as illustrative in nature, and not as restrictive.

A more complete appreciation of the present invention and many of the attendant aspects thereof will be readily obtained as the same becomes better understood by reference to the following description when considered in connection with the accompanying drawings:
FIG 1 is a flowchart of a method for providing semantic explanations for predictions made by an AI model, in accordance with one or more embodiments of the present invention;
FIG 2 is a block diagram representation of a system for providing semantic explanations for predictions made by an AI model, in accordance with one or more embodiments of the present invention;
FIG 3 is an exemplary flow diagram depicting an ontology for capturing problem domain knowledge, in accordance with one or more embodiments of the present invention;
FIG 4 is an exemplary flow diagram depicting an ontology for capturing solution domain knowledge, in accordance with one or more embodiments of the present invention;
FIG 5 is an exemplary flow diagram illustrating a process to enable a problem and solution domain explainability, in accordance with one or more embodiments of the present invention; and
FIG 6 illustrates a schematic diagram of a process for providing semantic explanations for predictions made by an AI model, in accordance with one or more embodiments of the present invention.

Various embodiments are described with reference to the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

Examples of a method, a system, and a computer-program product for providing semantic explanations for predictions made by an AI model are disclosed herein. In the following description, for the purposes of explanation, numerous specific details are set forth in order to provide a thorough understanding of the embodiments of the invention. It is apparent, however, to one skilled in the art that the embodiments of the invention may be practiced without these specific details or with an equivalent arrangement. In other instances, well-known structures and devices are shown in block diagram form in order to avoid unnecessarily obscuring the embodiments of the invention.

For purposes of the present invention, the term "AI model" refers to a computational structure designed to process input data and generate output predictions or decisions. This structure may include, but is not limited to, neural networks, decision trees, support vector machines, or other machine learning algorithms. An AI model is characterized by its ability to learn patterns from data and apply this learning to make predictions or decisions on new, unseen data. The "predictions by AI model" refers to the outputs generated by an AI model when presented with input data. These predictions can take various forms depending on the nature of the problem and the design of the AI model, and may include numerical values (as in regression problems), categorical labels (as in classification problems), or more complex structures such as sequences or matrices. It should be noted that the embodiments of the present invention are explained with respect to neural networks, but the scope of the present invention is not limited to neural networks only.

Further, in the present context, the term "semantic explanations for predictions" refers to human-understandable justifications or rationales for the predictions made by an AI model. These explanations provide statistical correlations, and incorporate domain-specific knowledge and context. In particular, these explanations provide insights into why the AI model made a particular prediction, which input features were most influential, how these features were processed within the AI model, and how the prediction relates to known entities and relationships in the problem domain. Semantic explanations aim to bridge the gap between the mathematical operations of the AI model and the real-world concepts and relationships that are meaningful to domain experts and end-users.

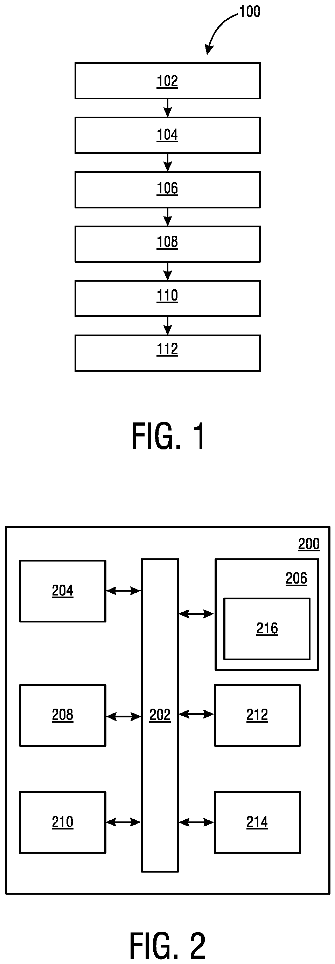

Referring to FIG 1, illustrated is a flowchart of a method (as represented by reference numeral 100) for providing semantic explanations for predictions made by an AI model, in accordance with an embodiment of the present invention. The method 100 leverages knowledge graphs representing both the problem domain and the solution domain to provide comprehensive and context-aware explanations. That is, the method 100 integrates knowledge from both the problem domain and the solution domain to generate semantic explanations that are meaningful to both domain experts and AI engineers. Such multifaceted explanation provides a rich understanding of the prediction, catering to both technical and domain-specific perspectives, and allows users to understand not just what the prediction is, but why the AI model made that prediction and how it relates to the real-world context.

Referring to FIG 2, illustrated is a block diagram of a system 200 for providing semantic explanations for predictions made by an AI model, in accordance with one or more embodiments of the present invention. It may be appreciated that the system 200 described herein may be implemented in various forms of hardware, software, firmware, special purpose processors, or a combination thereof. One or more of the present embodiments may take a form of a computer program product comprising program modules accessible from computer-usable or computer-readable medium storing program code for use by or in connection with one or more computers, processors, or instruction execution system. For the purpose of this description, a computer-usable or computer-readable medium may be any apparatus that may contain, store, communicate, propagate, or transport the program for use by or in connection with the instruction execution system, apparatus, or device. The medium may be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and digital versatile disc (DVD). Both processors and program code for implementing each aspect of the technology may be centralized or distributed (or a combination thereof) as known to those skilled in the art.

In an example, the system 200 may be embodied as a computer-program product programmed for providing semantic explanations for predictions made by an AI model. The system 200 may be incorporated in one or more physical packages (e.g., chips). By way of example, a physical package includes an arrangement of one or more materials, components, and/or wires on a structural assembly (e.g., a baseboard) to provide one or more characteristics such as physical strength, conservation of size, and/or limitation of electrical interaction. It is contemplated that in certain embodiments the computing device may be implemented in a single chip. As illustrated, the system 200 includes a communication mechanism such as a bus 202 for passing information among the components of the system 200. The system 200 includes one or more processing units 204 and one or more memory units 206. Herein, the memory unit 206 is communicatively coupled to the processing unit 204. In an example, the memory unit 206 may be embodied as a computer readable medium on which program code sections of a computer program are saved, the program code sections being loadable into and/or executable in a system to make the system 200 execute the steps for performing the said purpose.

Generally, as used herein, the term "processing unit" refers to a computational element that is operable to respond to and processes instructions that drive the system 200. Optionally, the processing unit includes, but is not limited to, a microprocessor, a microcontroller, a complex instruction set computing (CISC) microprocessor, a reduced instruction set (RISC) microprocessor, a very long instruction word (VLIW) microprocessor, or any other type of processing circuit. Furthermore, the term "processing unit" may refer to one or more individual processors, processing devices and various elements associated with a processing device that may be shared by other processing devices. Additionally, the one or more individual processors, processing devices and elements are arranged in various architectures for responding to and processing the instructions that drive the system 200.

Herein, the memory unit 206 may be volatile memory and/or non-volatile memory. The memory unit 206 may be coupled for communication with the processing unit 204. The processing unit 204 may execute instructions and/or code stored in the memory unit 206. A variety of computer-readable storage media may be stored in and accessed from the memory unit 206. The memory unit 206 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In particular, the processing unit 204 has connectivity to the bus 202 to execute instructions and process information stored in the memory unit 206. The processing unit 204 may include one or more processing cores with each core configured to perform independently. A multi-core processor enables multiprocessing within a single physical package. Examples of a multi-core processor include two, four, eight, or greater numbers of processing cores. Alternatively, or in addition, the processing unit 204 may include one or more microprocessors configured in tandem via the bus 202 to enable independent execution of instructions, pipelining, and multithreading. The processing unit 204 may also be accompanied with one or more specialized components to perform certain processing functions and tasks such as one or more digital signal processors (DSP), and/or one or more application-specific integrated circuits (ASIC). Other specialized components to aid in performing the inventive functions described herein include one or more field programmable gate arrays (FPGA) (not shown), one or more controllers (not shown), or one or more other special-purpose computer chips.

The system 200 may further include an interface 208, such as a communication interface (with the said terms being interchangeably used) which may enable the system 200 to communicate with other systems for receiving and transmitting information. The communication interface 208 may include a medium (e.g., a communication channel) through which the system 200 communicates with other system. Examples of the communication interface 208 may include, but are not limited to, a communication channel in a computer cluster, a Local Area Communication channel (LAN), a cellular communication channel, a wireless sensor communication channel (WSN), a cloud communication channel, a Metropolitan Area Communication channel (MAN), and/or the Internet. Optionally, the communication interface 208 may include one or more of a wired connection, a wireless network, cellular networks such as 2G, 3G, 4G, 5G mobile networks, and a Zigbee connection.

The system 200 also includes a database 210. As used herein, the database 210 is an organized collection of structured data, typically stored in a computer system and designed to be easily accessed, managed, and updated. The database 210 may be in form of a central repository of information that may be queried, analysed, and processed to support various applications and business processes. In the system 200, the database 210 provides mechanisms for storing, retrieving, updating, and deleting data, and typically includes features such as data validation, security, backup and recovery, and data modelling.

The system 200 further includes an input device 212 and an output device 214. The input device 212 may take various forms depending on the specific application of the system 200. In an example, the input device 212 may include one or more of a keyboard, a mouse, a touchscreen display, a microphone, a camera, or any other hardware component that enables the user to interact with the system 200. Further, the output device 214 may be in the form of a display, a printer, a communication channel, or the like, without any limitations.

In the present system 200, the processing unit 204 and accompanying components have connectivity to the memory unit 206 via the bus 202. The memory unit 206 includes both dynamic memory (e.g., RAM, magnetic disk, writable optical disk, etc.) and static memory (e.g., ROM, CD-ROM, etc.) for storing executable instructions that when executed perform the method steps described herein for providing semantic explanations for predictions made by an AI model. In particular, the memory unit 206 includes an artificial intelligence (AI) model explainer module 216 to perform steps for the said purpose.

Referring to FIGS 1-2 in combination, various steps of the method 100 (as described hereinafter), which may be executed in the system 200, or specifically in the processing unit 204 of the system 200, for providing semantic explanations for predictions made by an AI model, are described. It may be appreciated that although the method 100 is illustrated and described as a sequence of steps, it may be contemplated that various embodiments of the method 100 may be performed in any order or different combinations, and need not include all of the illustrated steps.

At step 102, the method 100 includes executing code to create and/or train an AI model based on a solution description mapping attributes from a problem domain knowledge graph to features in a solution domain knowledge graph. Herein, the method 100 begins with the execution of code to create and/or train the AI model. This code is based on a solution description that maps attributes from the problem domain knowledge graph to features in the solution domain knowledge graph. This step involves the translation of high-level conceptual relationships into a concrete, executable AI model. Herein, the problem domain knowledge graph represents the specific domain in which the AI model is being applied, such as a manufacturing process. The problem domain knowledge graph captures the entities, relationships, and attributes relevant to that domain. The solution domain knowledge graph, on the other hand, represents the components and relationships within the AI model itself. The mapping between these two knowledge graphs ensures that the AI model is grounded in the specific problem domain while leveraging appropriate AI techniques. This approach allows for the creation of AI models that are tailored to the specific needs and characteristics of the problem domain, potentially improving their accuracy and relevance.

When the code is executed, the AI model is either created or an existing model is further trained or fine-tuned. The creation process involves setting up structure of the AI model according to the specifications derived from the solution description. The training process involves exposing the AI model to a dataset, allowing the AI model to adjust internal parameters to minimize the discrepancy between predicted outputs and actual outputs, as defined by the loss function. The execution of this code results in an AI model that is tailored to the specific problem domain, with its structure and functionality informed by both the problem domain knowledge and the chosen AI techniques. This approach ensures that the resulting AI model is a specialized tool designed to operate effectively within the constraints and requirements of the specific problem domain.

For purposes of the present invention, the process of generating the executable code for the AI model involves several steps that bridge the gap between domain knowledge and AI implementation. This process begins with capturing knowledge from both the problem domain and the solution domain, then creating a mapping between these domains, and finally translating this mapping into executable code.

In particular, the first step involves capturing problem domain knowledge in a problem domain knowledge graph representing the attributes including entities and relationships in a specific problem domain. The problem domain knowledge graph represents the attributes, including entities and relationships, in the specific problem domain where the AI model will be applied. The problem domain knowledge graph is a structured representation of the real-world system or process that the AI model aims to analyse or predict. For example, in a manufacturing context, the problem domain knowledge graph may include entities such as equipment, materials, and processes, as well as relationships such as the flow of materials through different stages of production. The attributes in the problem domain knowledge graph may include measurable properties like temperature, pressure, or chemical composition, as well as more abstract concepts like quality metrics or efficiency measures.

Herein, capturing the problem domain knowledge comprises representing a domain including asset structure and process structure; system properties including measurement units and current values; causal and correlational relationships between the system properties; and cross-hierarchical connections. Asset structure refers to the physical or logical components of the system, such as equipment, materials, or resources. Process structure represents the sequence of steps or operations that occur within the system. For example, in a manufacturing context, the asset structure may include machines, raw materials, and finished products, while the process structure may represent the production line from raw material input to final product output. System properties are also captured in the problem domain knowledge representation. These properties include measurement units and current values. Measurement units provide context for the quantitative aspects of the system, ensuring that all data is consistently interpreted. Current values represent the state of the system at a given point in time. For instance, in a chemical process, system properties may include temperature (measured in degrees Celsius), pressure (measured in pascals), and flow rates (measured in litres per minute), along with their respective current values. Causal relationships indicate direct cause-and-effect connections, where a change in one property directly influences another. Correlational relationships, on the other hand, represent observed patterns or associations between properties, without necessarily implying causation. For example, there may be a causal relationship between the temperature of a reaction chamber and the rate of a chemical reaction, and a correlational relationship between energy consumption and production output. Further, cross-hierarchical connections represent relationships or interactions between entities that are not directly linked in the primary hierarchical structure of assets or processes. For instance, in a manufacturing plant, there may be a cross-hierarchical connection between the maintenance schedule of a machine in one part of the plant and the quality of products produced in another part.

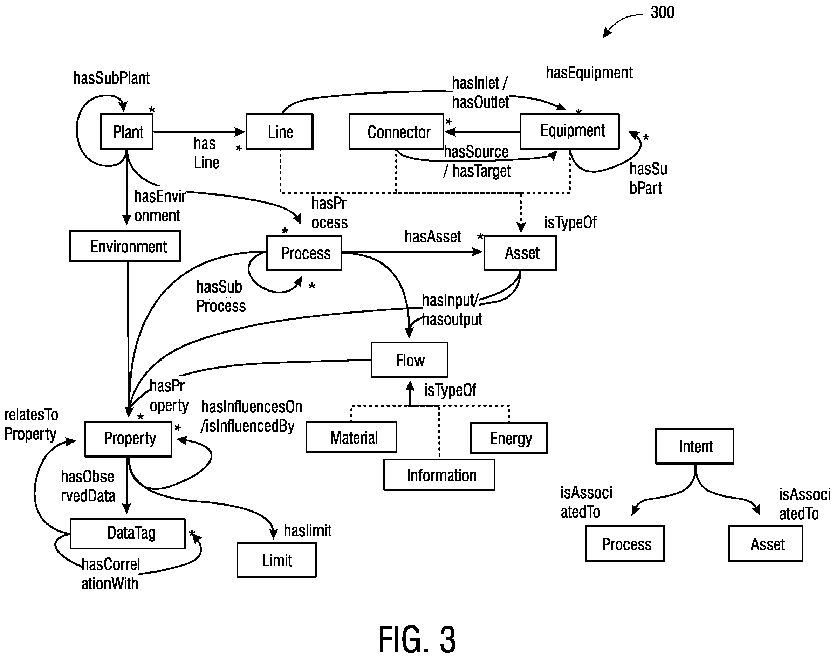

Referring to FIG 3, illustrated is an exemplary flow diagram depicting an ontology (as represented by reference numeral 300) for capturing problem domain knowledge. The ontology 300 represents a manufacturing plant meta model that captures both asset hierarchy and process hierarchy of a plant system. The asset hierarchy comprises multiple sub-plants, with each sub-plant containing several lines, and each line consisting of multiple pieces of equipment. Equipment entities have inlets and outlets connected to connectors, with each connector having a source and target equipment. The plant operates within an environment, represented by the Environment entity. The process hierarchy is represented by the Process entity, which can have sub-processes. Processes are performed by assets, and both processes and assets have inputs and outputs in the form of materials, information, or energy, represented by the Flow entity. The ontology 300 includes Property entities associated with the environment, assets, processes, and flows. Each property has an acceptable range of operation, represented by the Limit entity. The ontology 300 captures physics-based causal relationships between properties, as well as correlations between data series generated by observable properties. These relationships are represented by the "hasInfluenceOn" and "isInfluencedBy" connections between Property entities. The ontology 300 has the capability to represent the weight of these relationships, with physics-based relationships having a weight of 1, and data correlations having a weight equal to the absolute value of the correlation. The DataTag entity associated with Property entities likely represents specific measurements or data points. The Intent entity, connected to both Process and Asset entities, suggests the ontology 300 can capture intended purposes or goals associated with specific processes or assets within the system. The ontology 300 provides a structured representation of the problem domain, capturing the complex relationships between physical components, processes, properties, and intents within a manufacturing system. This structured knowledge forms the basis for mapping problem domain attributes to AI model features in the solution domain knowledge graph, enabling the generation of semantic explanations for AI predictions.

The next step for generating the executable code includes capturing solution domain knowledge in a solution domain knowledge graph representing the features including components and relationships in the AI model. The solution domain knowledge graph represents the features, including components and relationships, in the AI model itself. The solution domain knowledge graph is a structured representation of architecture and functionality of the AI model. The solution domain knowledge graph includes elements such as input features, output features, hidden layers, activation functions, and model hyperparameters. The relationships in the solution domain knowledge graph may represent the flow of data through the AI model, the dependencies between different components of the AI model, or the impact of hyperparameters on behaviour of the AI model.

Herein, capturing the solution domain knowledge comprises representing components of the AI model including at least one of: the input features, output features, model architectures, model hyperparameters, loss functions, optimization algorithms, and performance metrics. This process involves representing the components of the AI model in a structured manner. The representation includes input features, which are the variables from the problem domain that serve as inputs to the AI model. Output features represent the predictions or decisions that the model generates. Model architectures describe the structure of the AI model, such as the number and arrangement of layers in a neural network or the branching structure of a decision tree. Model hyperparameters are configuration settings that are not learned from the data but are set prior to the learning process. Examples include learning rate, number of hidden layers, or regularization parameters. Loss functions, which quantify the difference between predictions by the AI model and the actual values, are also included. The representation also include optimization algorithms, which determine how the model updates its internal parameters during training to minimize the loss function. Performance metrics provide ways to evaluate effectiveness of the AI model, such as accuracy for classification tasks or mean squared error for regression tasks.

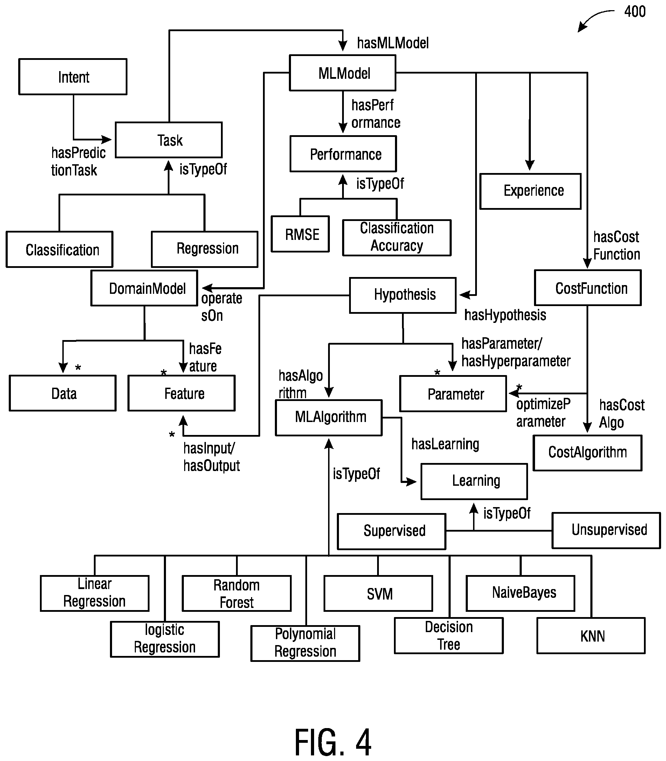

Referring to FIG 4, illustrated is an exemplary flow diagram depicting an ontology (as represented by reference numeral 400) for capturing solution domain knowledge. The ontology 400 represents a knowledge graph for the prediction machine learning domain. The central entity is Intent, which is associated with prediction tasks, classified as either Classification or Regression through the Task entity. The MLModel entity is connected to the Intent and represents the machine learning model. The MLModel is associated with several key components: Performance, Experience, CostFunction, and Hypothesis. The Performance entity is further categorized into specific metrics such as RMSE (Root Mean Square Error) and Classification Accuracy. The Hypothesis entity encapsulates the core elements of the machine learning model, including input and output features (represented by the Feature entity), parameters, and the ML algorithm. The MLAlgorithm entity is categorized into Supervised and Unsupervised learning types, with specific algorithms such as Linear Regression, Random Forest, SVM (Support Vector Machines), Naive Bayes, Decision Tree, and KNN (K-Nearest Neighbors) represented as subtypes. The CostFunction entity is linked to a CostAlgorithm, representing the optimization process for the model parameters. The DomainModel entity is connected to Data and Feature entities, indicating the reliance of the ML model on the associated domain model for data and feature gathering. The ontology 400 provides a structured representation of the solution domain, capturing the relationships between different components of machine learning models. This structured knowledge enables the mapping of AI model features to problem domain attributes, facilitating the generation of semantic explanations for AI predictions.

The next step for generating the executable code includes instantiating a solution description by mapping the attributes from the problem domain knowledge graph to the features in the solution domain knowledge graph. This mapping process creates a bridge between the real-world problem and the AI solution, which in turn defines how concepts and measurements from the problem domain are translated into inputs and structures in the AI model. For example, the mapping may specify that a certain sensor reading from the problem domain should be used as an input feature for the AI model, or that a particular relationship between variables in the problem domain should be reflected in architecture of the AI model. In particular, instantiating the solution description comprises describing connections between the problem domain knowledge graph and the solution domain knowledge graph using a controlled natural language interface. The controlled natural language interface provides a structured yet human-readable way to specify how elements from the problem domain map to components of the AI model. For example, using the controlled natural language interface, one may specify that "the temperature sensor reading from reactor A should be used as an input feature" or "the model should predict the quality rating of the final product". These descriptions create a clear link between real-world concepts from the problem domain and technical elements of the AI model in the solution domain.

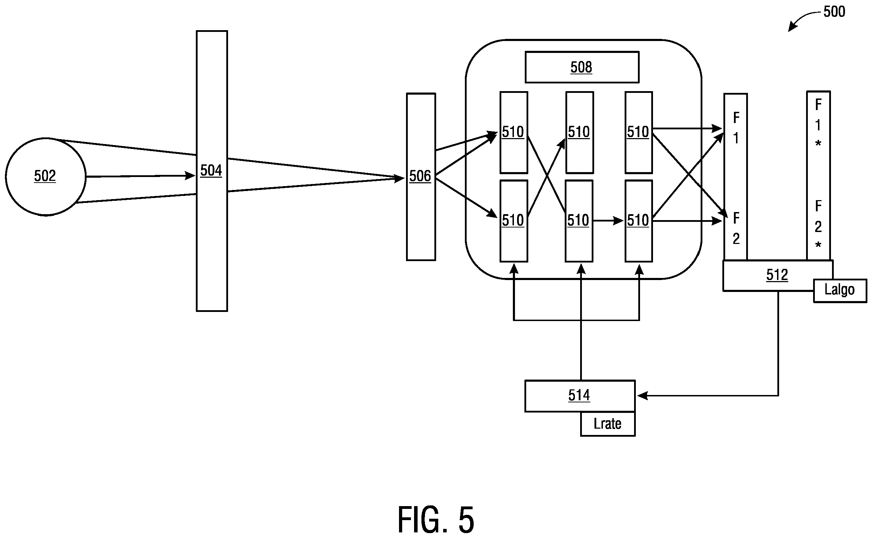

Referring to FIG 5, illustrated is an exemplary schematic diagram of an architecture (as represented by reference numeral 500) for mapping the attributes from the problem domain knowledge graph to the features in the solution domain knowledge graph. Herein, a knowledge graph entity 502, which represents the knowledge graph, connects to a preprocessing block 504, which processes the attributes from the problem domain knowledge graph. The preprocessed data then flows into an input layer 506 of the AI model. The architecture 500 includes a hidden space 508 comprising multiple hidden layers 510, represented by interconnected nodes. These hidden layers 510 process the input features, transforming them through multiple stages of computation. The output from the hidden layers 510 feeds into two nodes F1 and F2, which represent the output features of the AI model. These output features are then used by a loss calculator module 512 to calculate a "Loss" of the model. Further, the hyperparameters (e.g., epochs, batch size, regularization, validation split etc.) are described for the AI model. The architecture 500 also includes an optimizer module 514, which is connected to a Lrate (representing the learning rate) and influences the weights of the hidden layers. The loss calculation feeds into a LAlgo component, which represent the learning algorithm used to update the AI model based on the calculated loss. The architecture 500 illustrates the process of mapping problem domain attributes through preprocessing, into the input layer 506, through the hidden layers 510, to the output features, and finally to the loss calculation and optimization process. This mapping process creates a solution description that bridges the problem domain knowledge and structure of the AI model, enabling the generation of semantic explanations for predictions of the AI model.

It may be appreciated that, as used herein, the knowledge graph is a graph-based representation of information that uses nodes to represent entities and edges to represent relationships between them. In the context of AI/ML/DL models, nodes in the knowledge graph can represent input variables, hidden layers, neurons, and output variables, while edges can represent the connections between neurons and the flow of information through the model. By representing the model as a knowledge graph, it becomes easier to visualize and understand the decision-making process of the model. Furthermore, the knowledge graph can be used to extract meaningful insights into behaviour of the AI model, such as identifying important input variables, understanding the relationships between variables, and visualizing the activation patterns of neurons. This makes knowledge graphs a valuable tool for improving the explainability of AI model.

Finally, the executable code for the AI model is generated based on the solution description. This step involves translating the solution description into executable code for creating and/or training the AI model using a code generation algorithm. The code generation algorithm takes the structured representation of the solution description and provides actual programming code that can be executed to create or train the AI model. The solution is described using a controlled natural language (CNL) to enable better cognitive support to AI engineers during solution design. The CNL provides as a natural language interface to describe the connections between the problem and solution domain graph. The CNL is a type of language that is designed to be easy for both humans and computers to understand and process. It is a simplified form of natural language that restricts the vocabulary and grammar to a limited set of rules. This makes it easier for AI systems to accurately interpret and understand the language, reducing the potential for misunderstandings or errors.

It may be understood that a controlled natural language for AI solution description may typically use a limited set of terms and rules that are relevant to the AI solution in question. For example, the language may restrict the use of complex technical terms to a minimum, or it may use a set of predefined templates to guide the description of the solution. Additionally, the language may include constraints on the use of certain words or phrases to help ensure that the description is clear and concise. By using the CNL, AI solution descriptions can be made more readable and understandable for both technical and non-technical users, which can help to improve the adoption and implementation of the solution. Additionally, the use of the CNL can help to ensure that the solution is described in a consistent and standardized way, which can be beneficial for both the developers and users of the solution. Once the solution design is described, the CNL backend persists the description into instance of the solution domain knowledge, again persisted as a graph. This solution instance graph is then translated into an executable code to develop the final model.

Herein, the generated executable code typically includes instructions for data preprocessing, model architecture setup, training procedures, and prediction generation. For instance, the executable code may include functions to normalize input data based on the measurement units specified in the problem domain, set up neural network layers as defined in the solution domain, implement the chosen loss function and optimization algorithm, and generate predictions in the format specified by the output features. By generating code based on the solution description, this approach ensures that the resulting AI model closely aligns with both the problem domain requirements and the chosen AI techniques, thus generating meaningful semantic explanations for predictions of the AI model.

An example of solution design is provided below.

| |
|---|
| AI model has 5 inputs, 1 input layer. |
| Connected to 7 hidden layers, each with 100 neurons. |
| These hidden layers are interlinked to allow learning of input-output relationships. |
| Uses ReLU activation, MSE loss function. |
| Model has 1 output, predicts values based on input and relationships learned by hidden layers. |
| Trained on big data, makes accurate predictions. |
| CNL used to describe model helps clear, consistent deployment. |

An exemplary algorithm of the translation is provided below.

| | |
|---|---|
| Algorithm: translate_CNL_to_python(CNL_description) | |
| Input: CNL_description - a string containing the CNL description of the AI solution model | |
| Output: Python code equivalent to the input CNL description | |
| Step 1. Add import string for the TensorFlow library | |
| | "import tensorflow as tf" |
| Step 2. Split the CNL_description into separate lines | |
| | lines = CNL_description.split('\n') |
| Step 3. Initialize a string to hold the Python code | |
| | python_code = "" |
| Step 4. Add the import statement for TensorFlow to the Python code | |
| | python_code += "import tensorflow as tf\n" |
| Step 5. Parse the input layer | |
| | input_layer = lines[0] .split() |
| | num_inputs = input_layer[0] |
| | python_code += "model = tf.keras.Sequential()\n" |
| | python_code += f"model.add(tf.keras.layers.Dense({num_inputs}, input_shape=({num_inputs,})) )\n" |
| Step 6. Parse the hidden layers | |
| | hidden_layers = lines[1] .split() |
| | num_hidden = hidden_layers[0] |
| | for i in range (num_hidden) : |
| | python_code += "model.add(tf.keras.layers.Dense(100, activation='relu'))\n" |
| Step 7. Parse the activation and loss functions | |
| | activation = lines[2] .split() [0] |
| | loss_func = lines[3] .split() [0] |
| | python_code += f"model.compile(optimizer='adam', loss={loss_func}, metrics=['accuracy'])\n" |
| Step 8. Add the output layer to the Python code | |
| | python_code += "model.add(tf.keras.layers.Dense(1, activation='linear'))\n" |
| Step 9. Return the Python code | |
| | return python_code |

The generated code from the above algorithm is provided below. The generated code can be directly deployed to develop the AI model, which then can start

| |
|---|
| import tensorflow as tf |
| model = tf.keras.models.Sequential() |
| Add the input layer |
| model.add(tf.keras.layers.Dense(100, activation='relu', input_shape=(5,))) |
| Add the hidden layers |
| for i in range (7) : |
| model.add(tf.keras.layers.Dense(100, activation='relu')) |
| Add the output layer |
| model.add(tf.keras.layers.Dense(1)) |
| Compile the model |
| model. compile (optimizer='adam' , loss='mean_squared_error') |

predicting values.

Referring back to FIG 1, at step 104, the method 100 includes receiving a prediction output by the AI model. This prediction output is the result generated by the AI model after processing input data through its internal structure. The prediction output can take various forms depending on the nature of the problem and the design of the AI model. For instance, in a manufacturing context, the prediction output may be a forecasted temperature in a reaction zone, an anticipated gas composition at a process exit point, or a projected material bed height.

At step 106, the method 100 includes tracing the prediction output through the solution domain knowledge graph to identify contributing input features and intermediate representations. As discussed, the solution domain knowledge graph is a structured representation of components of the AI model and their relationships. The tracing process creates a map of how information flowed through the AI model to produce the prediction output. This map includes the direct connections between layers, as well as the strength or weight of these connections, which indicates the relative importance of different features and intermediate representations in generating the final prediction. In particular, herein, tracing the prediction comprises traversing the solution domain knowledge graph from the prediction output back to the input features through the hidden layer representations. In other words, the tracing process involves a systematic traversal of the solution domain knowledge graph, starting from the prediction output and working backwards through structure of the AI model to identify the contributing input features and intermediate representations.

Specifically, the tracing process begins at the output layer of the AI model, as represented in the solution domain knowledge graph. From this point, the method 100 follows the connections in the solution domain knowledge graph that lead to the preceding layers. In a neural network-type model, this may involve moving from the output layer through the hidden layers to the input layer. At each step of this traversal, the method 100 identifies and records the nodes (representing neurons or processing units) and edges (representing weights or connections) that contributed significantly to the final prediction. As the tracing proceeds, the method 100 identifies the contributing input features. These are the initial inputs to the AI model that had an impact on the final prediction. Simultaneously, the method 100 identifies intermediate representations, which capture how the AI model processes and recombines the input features to arrive at its prediction. These are the transformed or combined features that exist within the hidden layers of the AI model.

For purposes of the present invention, ReachSet and ConnComp, as described in below algorithm, serve as a reference structure to identify all contributing factors in a prediction made by a machine learning algorithm. The explanations generated include information on 1) the contributing features, 2) the weight of the connections between features, 3) the connected components of the features, 4) the problem intent type, and 5) the machine learning algorithm used for the prediction. Herein, the inputs are received, including the intent of the problem statement, represented as I, and the solution model represented as ML. The inputs also include the predicted feature f and its value v', along with the ReachSet and ConnComp from the algorithm. Further, all relevant features and their weights contributing to the predicted feature value are outputted, including all components connected to the features and their respective contributions for a detailed explanation, and all relevant domain rules affecting the outcome of the features. The output also includes the problem intent type and the specifications of the ML solution model, enabling explanations at the solution level.

The solution domain explanation algorithm is provided below.

| |
|---|
| Algorithm: Explanation of Predicted Feature f' and Value v' |
| Input: Predicted feature f' and value v' |
| Output: Relevant features, their weights, connected components, problem intent type, and ML solution model details |
| Step 1: Gather all system properties reachable from f' in Knowledge Graph (KG) through ReachSet |
| Set ReachableProperties as the set of reachable system properties from f' in the KG |
| Step 2: Compute connected components |
| Compute the set of connected components, ConnectedComp, from ReachableProperties |
| Step 3: Compute relation weights |
| Compute the relation weights of the features in ReachableProperties with respect to f' |
| Arrange the weights in increasing order |
| Step 4: Derive ML model, problem, and intent type |
| Derive the ML model, problem, and intent type from the solution design KG for the outcome feature f' |
| Step 5: Identify rules affecting f' |
| Identify all rules in the KG that affect f' |
| Step 6: Log information |

Further, at step 108, the method 100 includes generating a feature mapping matrix indicating relationships between input features, hidden layer representations, and the prediction output. This feature mapping matrix is a structured representation that indicates the relationships between input features, hidden layer representations, and the prediction output. The feature mapping matrix is constructed by recording information for each layer of the AI model, starting from the input layer and progressing through the hidden layers to the output layer. Herein, generating the feature mapping matrix comprises, for each hidden layer of the AI model, recording one or more of contributing input features, number of neurons, activation functions, and weights. That is, for each hidden layer of the AI model, the feature mapping matrix records one or more of the following: contributing input features, number of neurons, activation functions, and weights. This information captures how the input features are transformed and combined as they propagate through the AI model.

In the feature mapping matrix, each row typically represents an input feature or an intermediate representation in a hidden layer, while columns represent the progression through the layers of the AI model. The values in the feature mapping matrix indicate the strength or importance of the relationship between features at different layers. These values may be derived from the weights of connections between neurons, the activation levels of neurons, or other relevant metrics that quantify the flow of information through the AI model. This way the feature mapping matrix provides how input features are used and transformed within the AI model to produce the final prediction output.

At step 110, the method 100 includes identifying relevant entities and relationships from the problem domain knowledge graph connected to the contributing input features. The problem domain knowledge graph, as previously described, represents the structure and relationships of entities within the specific domain in which the AI model is being applied. This step involves traversing the problem domain knowledge graph, starting from the entities that correspond to the contributing input features identified during the tracing process. In particular, identifying the relevant entities and relationships comprises traversing the problem domain knowledge graph starting from entities corresponding to the contributing input features. That is, the method 100 involves traversing the problem domain knowledge graph, identifying entities that are directly connected to the contributing input features, as well as entities that are indirectly connected through chains of relationships. For each identified entity, the method 100 also records the nature of the relationship connecting the entity to the contributing input features. This creates a bridge between the internal processes of the AI model (as captured in the feature mapping matrix) and the real-world context of the problem domain.

Finally, at step 112, the method 100 includes outputting an explanation for the prediction output comprising at least one of the identified contributing input features and their weights, the traced path through hidden layers of the AI model, and relevant problem domain entities and relationships. This explanation is comprehensive, drawing from the various analyses performed in the previous steps of the method 100. Specifically, the explanation includes identified contributing input features and their weights, which present the input variables that had the most significant impact on the prediction, along with a measure of their relative importance. The explanation further includes traced path through hidden layers of the AI model, which describes how the input features were transformed and combined as they propagated through structure of the AI model. Further, the explanation includes relevant problem domain entities and relationships, which connects internal processes of the AI model to the real-world context of the problem domain, describing how the contributing input features relate to specific entities in the problem domain (such as equipment or processes), and how these entities are connected through various relationships. The explanation is formulated in a manner that is comprehensible to users familiar with the problem domain, while also providing insight into decision-making process of the AI model.

In an embodiment, to explain the predictions from the solution domain point of view, the present invention uses the following steps.
(a) Take the output variable and trace it back to its input features through the solution model graph using the above algorithm.
(b) Based on the identified features and intermediate representation of features in the hidden layers, create a feature mapping matrix. Now this feature mapping matrix maintains a record of the feature with each hidden layer and the activation function.
(i) While tracing the feature through hidden layers, also trace the configuration of the hidden layer with respect to the number of neurons in each hidden layer, as this is one of the important explanation in the prediction.
(ii) While doing so, also map the feature distributed across the neurons in a hidden layer based on the weights.
(c) Now, as a part of the explanation, list down the feature trace with respect to the layer through which the feature has passed along with the contribution of the feature in that layer.
(d) This process is continued till the feature is traced back to the input layer (as explain in algorithm below).

| | |
|---|---|
| Algorithm: Tracing the Output Variable to Input Features | |
| Input: Output variable (f') and solution model graph | |
| Output: Traced input features, feature mapping matrix, and layer configurations | |
| Step 1: Trace output variable to input features | |
| | - Call Algorithm 1 to trace f' back to its input features through the solution model graph |
| Step 2: Create feature mapping matrix | |
| | - Initialize a feature mapping matrix |
| | - For each identified feature and intermediate representation of features in hidden layers |
| | - Record the feature with its corresponding hidden layer and activation function in the matrix |
| Step 3: Trace hidden layer configurations | |
| | - For each hidden layer in the solution model graph |
| | - Record the number of neurons in that layer |
| Step 4: Map features across neurons | |
| | - For each feature in a hidden layer |
| | - Map the feature across neurons in the layer based on their weights |
| Step 5: List down feature trace | |
| | - Initialize a list to record feature trace |
| | - For each feature and its corresponding hidden layer |
| | - Add the feature trace to the list with the layer name and its contribution in that layer |
| Step 6: Continue till input layer | |
| | - Repeat steps 4 and 5 until the feature is traced back to the input layer |

In some embodiments, the method 100 further includes additional steps to enhance the context and relevance of the explanation. First, the method 100 receives a description of an intent associated with the prediction. This intent describes the overall purpose or goal of prediction of the AI model. For instance, in a manufacturing setting, the intent might be "optimize energy efficiency" or "predict equipment failure." Next, the method 100 identifies a problem type based on the received intent. The problem type categorizes the nature of the task the AI model is performing. Common problem types include regression (predicting a continuous value), classification (assigning input to predefined categories), or time series forecasting (predicting future values based on historical data). Finally, the method 100 includes the identified problem type in the explanation. This addition provides important context about the nature of the prediction task, helping users understand the appropriate framework for interpreting output of the AI model. By including the problem type in the explanation, the method 100 provides users with a more complete picture of function of the AI model. This information helps users understand how the model arrived at a specific prediction, and also what kind of predictions the AI model is designed to make and for what purpose. This contextual information is particularly valuable in complex systems where multiple AI models may be deployed for different purposes, each requiring a different interpretive framework.

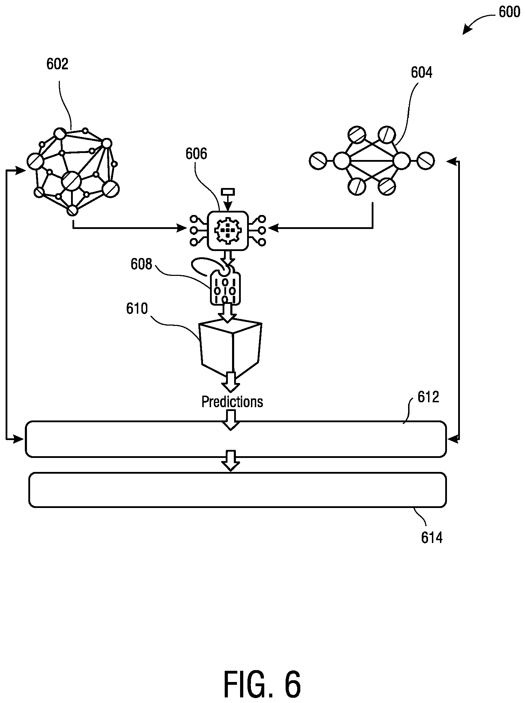

FIG 6 illustrates a schematic diagram of a process 600 for providing semantic explanations for predictions made by an AI model. The process 600 begins with two parallel steps: capturing problem domain knowledge and capturing solution domain knowledge. The problem domain knowledge is represented by a problem domain knowledge graph 602, which in this example depicts knowledge related to a gas power plant. The problem domain knowledge graph 602 is shown as a network of interconnected nodes, representing entities and relationships specific to the problem domain. Simultaneously, the solution domain knowledge is captured in a solution domain knowledge graph 604, which represents knowledge about AI algorithms, methods, and problem types. The solution domain knowledge graph 604 is depicted as a network of interconnected nodes, representing different aspects of AI model design and implementation.

The process then proceeds to a step where a solution graph 606 is instantiated as an AI solution design. This step involves mapping attributes from the problem domain knowledge graph 602 to features in the solution domain knowledge graph 604, generating a solution graph 606. Further, the solution design is translated into executable code 608, represented by a stream of binary code flowing into an AI model 610. The AI model 610 generates predictions, which are then fed into a reasoning mechanism 612. The reasoning mechanism 612 involves reasoning the prediction against the problem and solution domain knowledge. This step utilizes the knowledge captured in both the problem domain knowledge graph 602 and the solution domain knowledge graph 604, as indicated by the arrows connecting these elements to the reasoning mechanism 612. Finally, the process 600 results in the production of explanations 614. These explanations 614 are semantic in nature, providing context-rich interpretations of predictions of the AI model 610 by leveraging both problem domain and solution domain knowledge.

In an example implementation of the method 100, the AI model is specifically a machine learning model designed for predicting parameters of a manufacturing process. For instance, there is a need for a more efficient and robust method of control of the cement kiln plant. This control needs to be in line with the operator heuristics and be aimed towards optimization of the plant. There is also a need for this control loop to be scalable to various cement manufacturing plants to obtain uniformity in the control logic. Since it is difficult to obtain the control logic using first principles model, there is a need to obtain an AI driven control logic which should be in line with the operator control logic. The solution should optimize the kiln while meeting environmental standards and should not compromise the production capacity of the plant. All this should be achieved at the lowest possible operating cost.

In the present example, for the cement kiln to move towards an AI-based closed loop system, there is a need to explain the forecasts and recommendations coming out of the system. This is to make sure the AI predictions are in line with the operator heuristics and do not violate any safety constraints, including:
(i) Explain the forecasts. Which parameters are impacting the forecast the most?
(ii) Explain the recommendations. If any set point change is recommended, we need to notify the operator current and future state of the kiln and why the set point change was recommended.
(iii) The explanations will help the operator decide if the recommended set point changes violate the threshold or XAI in cement kiln.
(iv) Many documents of set point actions taken in the past along with the impact on the critical parameters exist in various locations. Knowledge graphs created out of these documents provide a rich source of information about the operator heuristics and will help in explaining and restricting the recommendations.

In this context, the problem domain knowledge graph represents components and processes of a manufacturing plant. The problem domain knowledge graph in this implementation captures the complex structure and relationships within a manufacturing plant. This problem domain knowledge graph includes representations of physical components such as equipment, production lines, and raw materials. The problem domain knowledge graph also represents processes such as chemical reactions, material transformations, and production workflows. The relationships between these components and processes are captured, including dependencies, sequences, and causal connections. This comprehensive representation of the manufacturing plant forms the basis for contextualizing predictions by the AI model within the real-world manufacturing environment.

In this manufacturing-focused implementation, the prediction output from the AI model comprises at least one of the following parameters:
(i) Temperatures in reaction zones: These predictions relate to the thermal conditions in specific areas of the manufacturing process where chemical reactions or physical transformations occur. Accurate temperature predictions allow for optimizing reaction efficiency and ensuring product quality.
(ii) Gas composition at a process exit point: This prediction involves forecasting the chemical makeup of gases at a specific point in the manufacturing process, typically where gases are emitted. This information is used for process control and emissions management.
(iii) Material bed height: This prediction relates to the depth or volume of materials in certain manufacturing equipment, such as in fluidized beds or conveyor systems. Predicting bed height is important for maintaining optimal process conditions and preventing equipment overload or underutilization.

The contributing input features that the AI model uses to generate these predictions comprise at least one of the following:
(i) Material quantities: This refers to the amounts of raw materials, intermediates, or additives used in the manufacturing process. Variations in material quantities can significantly affect process outcomes.
(ii) Equipment speeds: This includes the operational speeds of various machinery involved in the manufacturing process, such as mixers, conveyors, or reactors. Equipment speeds often directly influence process efficiency and product quality.
(iii) Rotation speeds: This specifically refers to the rotational velocities of equipment like centrifuges, stirrers, or rotary kilns. Rotation speeds can impact mixing efficiency, separation processes, or heat distribution.
(iv) Feed rates: This relates to the rate at which materials are introduced into various stages of the manufacturing process. Feed rates are calibrated for maintaining process balance and consistency.
(v) Conveyor speeds: This refers to the velocities of conveyor belts used to transport materials through different stages of the manufacturing process. Conveyor speeds affect production rate and can influence parameters like material bed height.

In this implementation, the semantic explanations generated by the method 100 may connect these specific input features to the predicted outputs, tracing their influence through structure of the AI model, and relating them to the relevant components and processes represented in the problem domain knowledge graph. This approach provides manufacturing plant operators and engineers with contextually rich, domain-specific explanations for predictions of the AI model, enhancing their ability to make informed decisions based on these predictions.

Such a solution will be very beneficial to the manufacturer, such as the cement manufacturer, broadly due to the following reasons:
(a) There will be an increase in the quality of cement resulting from an increase in the efficiency of the combustion reactions.
(b) There will be a reduction in fuel wastage and other energy wastages.
(c) There will be a reduction in emissions.
(d) There will be a uniformity in the control system among different plants.
(e) The operator will have a real time assistance from AI and the ability to take control action beforehand.
(f) The operator will have a real time dashboard indicating all the critical parameters and a real time recommendation of the control parameters.

In general, as part of the industry 4.0 initiative, the target situation for the cement kiln is as follows:
(I) Forecasts of all critical kiln parameters - Autonomous system to forecast the critical kiln parameters as a function of other available measurements and input conditions.
(II) Constrained multi parameter Optimization of kiln for smooth operations (reduced downtimes), quality enhancement and fuel optimization - Recommendation system to suggest changes in control variables to restrict the critical parameters to the desired upper and lower thresholds which in result will have a positive impact on the cement quality and ensure smooth kiln operations while maintaining the desired throughput and adhering to constraints.

This can be achieved in a phase wise manner utilizing advanced machine learning and artificial intelligence algorithms:
Phase A: Predictive modelling to forecast the critical kiln parameters using the different known inputs. This will be used to monitor the future state of the kiln so that the operator can take appropriate actions beforehand.
Phase B: Optimize and vary the controllable inputs to achieve smooth kiln operations with reduced downtimes and improve the cement quality and optimize the fuel consumption for reduced operating costs. These optimized variables will be given as recommendations to the operator to act accordingly.
Phase C: Move from a pilot recommendation engine to a closed loop solution by providing inputs to the PLC (Programmable Logic Controllers) at specified time intervals.

While the present invention has been described in detail with reference to certain embodiments, it should be appreciated that the present invention is not limited to those embodiments. In view of the present invention, many modifications and variations may be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

### Reference Numerals

- 100: method
- 102: step
- 104: step
- 106: step
- 108: step
- 110: step
- 112: step
- 200: system
- 202: bus
- 204: processing unit
- 206: memory unit
- 208: interface
- 210: database
- 212: input device
- 214: output device
- 216: AI model explainer module
- 300: ontology
- 400: ontology
- 500: architecture
- 502: knowledge graph entity
- 504: preprocessing block
- 506: input layer
- 508: hidden space
- 510: hidden layers
- F1, F2: nodes
- 512: loss calculator module
- 514: optimizer module
- 600: process
- 602: problem domain knowledge graph
- 604: solution domain knowledge graph
- 606: solution graph
- 608: executable code
- 610: AI model
- 612: reasoning mechanism
- 614: explanations

## Claims

1. A computer-implemented method (100, 600) for providing semantic explanations (614) for predictions made by an artificial intelligence (AI) model (210), comprising:
executing code (608) to create and/or train an AI model (610) based on a solution description mapping attributes from a problem domain knowledge graph (602) to features in a solution domain knowledge graph (604);
receiving a prediction output by the AI model (610);
tracing the prediction output through the solution domain knowledge graph (604) to identify contributing input features and intermediate representations;
generating a feature mapping matrix indicating relationships between input features, hidden layer representations, and the prediction output;
identifying relevant entities and relationships from the problem domain knowledge graph (602) connected to the contributing input features; and
outputting an explanation (614) for the prediction output comprising at least one of the identified contributing input features and their weights, the traced path through hidden layers of the AI model (610), and relevant problem domain entities and relationships.

2. The method (100, 600) of claim 1, wherein the executable code (608) for the AI model (610) is generated by:
capturing problem domain knowledge in a problem domain knowledge graph (602) representing the attributes including entities and relationships in a specific problem domain;
capturing solution domain knowledge in a solution domain knowledge graph (604) representing the features including components and relationships in the AI model (610);
instantiating a solution description by mapping the attributes from the problem domain knowledge graph (602) to the features in the solution domain knowledge graph (604); and
generating the executable code (608) for the AI model (610) based on the solution description.

3. The method (100, 600) of claim 2, wherein capturing the problem domain knowledge comprises representing a domain including asset structure and process structure; system properties including measurement units and current values; causal and correlational relationships between the system properties; and cross-hierarchical connections.

4. The method (100, 600) of claim 2, wherein capturing the solution domain knowledge comprises representing components of the AI model (610) including at least one of: the input features, output features, model architectures, model hyperparameters, loss functions, optimization algorithms, and performance metrics.

5. The method (100, 600) of claim 2, wherein instantiating the solution description comprises describing connections between the problem domain knowledge graph (602) and the solution domain knowledge graph (604) using a controlled natural language interface.

6. The method (100, 600) of claim 2, wherein generating the executable code (608) comprises translating the solution description into the executable code (608) for creating and/or training the AI model (610) using a code (608) generation algorithm.

7. The method (100, 600) of claim 1, wherein tracing the prediction comprises traversing the solution domain knowledge graph (604) from the prediction output back to the input features through the hidden layer representations.

8. The method (100, 600) of claim 1, wherein generating the feature mapping matrix comprises, for each hidden layer of the AI model (610), recording one or more of contributing input features, number of neurons, activation functions, and weights.

9. The method (100, 600) of claim 1, wherein identifying the relevant entities and relationships comprises traversing the problem domain knowledge graph (602) starting from entities corresponding to the contributing input features.

10. The method (100, 600) of claim 1, further comprising:
receiving a description of an intent associated with the prediction;
identifying a problem type based on the intent; and
including the problem type in the explanation (614).

11. The method (100, 600) of claim 1, wherein the AI model (610) is a machine learning model for predicting parameters of a manufacturing process, and wherein the problem domain knowledge graph (602) represents components and processes of a manufacturing plant.

12. The method (100, 600) of claim 11, wherein the prediction output comprises at least one of temperatures in reaction zones, gas composition at a process exit point, or material bed height.

13. The method (100, 600) of claim 11, wherein the contributing input features comprise at least one of material quantities, equipment speeds, rotation speeds, feed rates, or conveyor speeds.

14. A system (200) comprising:
one or more processing units (204); and
a memory unit communicatively coupled to the one or more processing units (204), wherein the memory unit (206) comprises an artificial intelligence (AI) model (210) explainer module (216) stored in the form of machine-readable instructions executable by the one or more processing units (204), wherein the AI model explainer module (216) is configured to perform method (100, 600) steps for providing semantic explanations (614) for predictions made by an AI model (610), according to any of the claims 1 to 13.

15. A computer-program product having machine-readable instructions stored therein, which when executed by one or more processing units (204), cause the one or more processing units (204) to perform a method (100, 600) according to any of the claims 1 to 13.
